# EUROPÄISCHE PATENTANMELDUNG

(11) **EP 1 441 274 A2**
(43) Veröffentlichungstag der Anmeldung: **28.07.2004**
(21) Anmeldenummer: 03025854.5
(22) Anmeldetag: 11.11.2003
(51) Int. Cl.: G05D 23/27, F25B 49/00, B60H 1/32

(54) **Temperaturregelung mit Infrarotmessung**

(30) Priorität: 27.01.2003 US 351585
(71) Anmelder: Behr America, Inc, Troy, Michigan 48083 (US)
(72) Erfinder: Lindner, Björn, Fort Worth Texas 76137 (US); Ta, Thien D., Saginaw Texas 76131 (US)
(74) Vertreter: Grauel, Andreas, Dr.

(57) **Zusammenfassung**

System und Verfahren zum Messen und Regeln der Temperatur eines einen Infrarotsensor (46) verwendenden Heizungs-, Lüftungs- und Klimatisierungssystems. Der Infrarotsensor (46) wird zum Erkennen von Temperatur über mehrere unterschiedliche Bereiche auf einer Verdampferoberfläche (26) benutzt, auf der eine überkühlte Stelle vorkommen kann. Vorzugsweise wird vom Infrarotsensor (46) die gesamte Oberfläche an der Luftauslaßseite des Verdampfers (26) fortlaufend abgetastet. Die gemessene Temperatur wird zum Erkennen von irgendwelchen überkühlten Stellen benutzt, die sich dynamisch auf der Verdampferoberfläche bilden können. Das System wird als Reaktion auf die erkannte Temperatur geregelt.

## Beschreibung

### ERFINDUNGSGEBIET

Die vorliegende Erfindung betrifft allgemein ein System und ein Verfahren zum Messen und Regeln der Temperatur eines Systems für Heizung, Lüftung und Klimatisierung. Insbesondere betrifft sie ein System und ein Verfahren zum Regeln der Temperatur eines Fahrzeugsystems für Heizung, Lüftung und Klimatisierung mit einem Infrarot-(IR-)Sensor.

### STAND DER TECHNIK

Kühlanlagen, insbesondere die Verdampferschlangen von Kühlschränken, Klimatisierungsgeräten oder Wärmepumpanlagen, sind für Frostansammlungen während des Betriebes empfindlich. Frostansammlung ist unerwünscht, indem sie den Luftstrom (manchmal vollständig) durch Blockieren des Luftganges verringert; den Kühlungswirkungsgrad der Anlage verringert; die Kapazität der Anlage verringert und Betriebskosten erhöht. Die Ansammlung von Eis oder Frost auf Verdampferschlangen in Kühlungsgeräten ist ein bedeutsames Problem. Durch die Ansammlung wird die zu kühlende Luft gegen die durch die Verdampfereinheit umlaufende kalte Kühlflüssigkeit isoliert, woraus sich Schwierigkeiten ergeben, den gekühlten Raum auf der gewünschten Temperatur zu halten.

Bei einem bekannten Verfahren zum Verhindern von Frostansammlung wird ein Zeitgeber benutzt, der in einem vorgewählten Zeitintervall den Kompressor abschaltet und eine den Verdampferschlangen benachbarte thermische Heizungsvorrichtung einschaltet, um das Eis oder den Frost zu schmelzen. Der Nachteil dieses Verfahrens besteht darin, daß sich in Abhängigkeit von der Umgebungsfeuchtigkeit und -temperatur der Luft Eis oder Frost nicht immer mit konstanter Geschwindigkeit ansammeln. Weiterhin tauen die meisten uhrbetätigten Abtausysteme aus Übervorsicht häufiger als notwendig ab, um jeglichen Aufbau von Eis oder Frost zu beseitigen. Dieses Abtauen in einem regelmäßigen Zeitzyklus, egal ob es benötigt ist oder nicht und unabhängig von der Menge von angesammeltem Eis oder Frost ist unwirtschaftlich und verschwendet Strom.

Ein weiteres Verfahren besteht darin, den Kompressor einfach eine vorbestimme Zeit lang auszuschalten, die im allgemeinen dazu ausreicht, daß das Eis oder der Frost schmelzen kann. Durch Abschalten des Kompressors kann jedoch die Temperatur im gekühlten Raum ansteigen, wodurch der Kompressor und sein Motor nur übermäßig arbeiten muß, um die gewünschte Temperatur aufrechtzuerhalten.

Ein für Heizungs-, Lüftungs- und Klimatisierungsanlagen in Fahrzeugen benutztes bekanntes Abtauregelungsverfahren umfaßt das Messen der Temperatur an einem festen Ort im System wie beispielsweise im Rippenbereich eines Verdampfers. Beispielsweise kann sich im Rippenbereich ein Tieftemperaturgrenzenregler (Freezestat) befinden, der sich schließt, wenn die Temperatur auf eine vorbestimmte Temperatur abfällt. Als Alternative kann ein Thermistor mit negativem Temperaturkoeffizienten (NTC) benutzt werden. In beiden Fällen wird, wenn erkannt wird, daß die Temperatur am Ort des Sensors auf einen vorbestimmten Pegel abgefallen ist, der Kompressor ausgeschaltet und die Lufttemperatur steigt an. Eine vorbestimmte Temperatur wird als maximale Lufttemperatur festgelegt, die erreicht wird, ehe der Kompressor wieder eingeschaltet wird.

Ein Problem, das mit einem derartigen Verfahren verbunden ist, besteht darin, daß der Sensor nur einen einzigen Ort erfaßt. Es kann jedoch an verschiedenen Stellen über die gesamte Oberfläche hinweg in Abhängigkeit von dem Füllstand des Kältemittels, der Luftstromverteilung der Einheit, der Luftstromhöhe, dem Ein-/Auszyklus des Kompressors usw. eine überkühlte Stelle (d.h. eine Stelle, die kalt genug für eine Eisbildung ist) auftreten. So ist der Ort einer überkühlten Stelle unvorhersehbar. Wenn sich eine überkühlte Stelle außerhalb des Meßgebiets entwickelt, kann der feststehende Sensor die kälteste Stelle nicht erfassen und der Kompressor wird sich nicht früh genug ausschalten, um eine Frostansammlung zu verhindern. Zur Linderung dieses Problems kann die Schalttemperatur auf eine höhere Temperatur als die optimale Temperatur (z.B. 0°C) eingestellt werden, aber dadurch wird verhindert, daß die Lufttemperatur ihre theoretisch niedrigste Temperatur erreicht.

Ein weiteres Problem besteht darin, daß es durch konstruktionsbedingte Beschränkungen schwierig sein könnte, die richtige Kern- und Befestigungsstelle für den Temperatursensor auszuwählen. Weiterhin läßt bei einigen Anwendungen das ausgewählte Kern- und Systemlayout nicht zu, daß die Temperatursonde den Kern oder die Rippen durchdringt.

Bei einem weiteren Abtauverfahren, das in Heizungs-, Lüftungs- und Klimatisierungsanlagen für Fahrzeuge benutzt wird, wird die Messung der Kältemitteltemperatur beispielsweise unter Verwendung eines NTC-Thermistors benutzt. Obwohl dies zufriedenstellende Betriebsergebnisse bietet, erfordert der Austausch des Sensors die vollständige Entnahme des Kältemittels. Weiterhin erfordert das Verfahren besondere Vorsichtsmaßnahmen bei der Befestigung des Sensors, um die Möglichkeit eines Lecks zu verhindern.

Noch ein weiteres Verfahren zum Regeln eines Fahrzeug-Heizungs-, Lüftungs- und Klimatisierungssystems umfaßt das Messen der luftseitigen Temperatur, beispielsweise mit einem NTC-Thermistor. Ein solcher Ansatz bietet jedoch nicht eine genaue Darstellung von überkühlten Stellen, die aufgrund der dynamischen Belastung und des dynamischen Zustandes des Kältemittelkreises auftreten können. Dieses Problem ist besonders in größeren Heizungs-, Lüftungs- und Klimatisierungsanlagen akut, wie sie in Lastwagen benutzt werden.

### KURZE BESCHREIBUNG DER ERFINDUNG

Nach einem Aspekt der Erfindung umfaßt ein System zum Messen der Temperatur zum Regeln eines Heizungs-, Lüftungs- und Klimatisierungssystems einen Verdampfer mit einer Oberfläche; mindestens einen Infrarotsensor zum Erfassen der Temperatur von mehreren Bereichen der Verdampferoberfläche; und einen Prozessor zur Bestimmung, ob die erfaßte Temperatur an mindestens einem der mehreren Bereiche der Verdampferoberfläche unterhalb einer Schwellentemperatur liegt; und einen Regler zum Regeln der Funktionsweise des Heizungs-, Lüftungs- und Klimatisierungssystems als Reaktion auf eine Bestimmung, ob die erfaßte Temperatur an mindestens einem der mehreren Bereiche der Verdampferoberfläche unterhalb der Schwellentemperatur liegt.

Nach einem weiteren Aspekt der Erfindung umfassen die mehreren Bereiche im wesentlichen die Gesamtheit der Luftauslaßseite des Verdampfers.
Nach einem weiteren Aspekt der Erfindung wird die Verdampferoberfläche zeilenweise in einem Rastermuster abgetastet. Als Alternative ist die Verdampferoberfläche in Gebiete eingeteilt und es wird die Temperatur jedes Gebiets erfaßt.

Nach einem noch weiteren Aspekt der Erfindung stellt der Regler die Leistung eines Heizungs-, Lüftungs- und Klimatisierungskompressors auf Grundlage eines vom Sensor erhaltenen Signals ein. Beispielsweise kann das Signal auf eine Weise benutzt werden, die von der Art des Kompressors abhängig ist. Der Regler kann das Abschalten eines festen Kompressors verursachen oder als Alternative kann er die Leistung eines verstellbaren Kompressors verringern, wenn festgestellt wird, daß die erfaßte Temperatur von mindestens einem der mehreren Bereiche der Verdampferoberfläche unter der Schwellentemperatur liegt.

Nach einem noch weiteren Aspekt der Erfindung beträgt die vorbestimmte Temperatur 0°C. Die vorbestimmte Temperatur kann jedoch niedriger als 0°C sein, beispielsweise in Fällen, wo die Luftfeuchtigkeit relativ niedrig ist.

Nach einem noch weiteren Aspekt der Erfindung umfaßt ein Verfahren folgendes:
Erfassen der Temperatur von mehreren Stellen einer Verdampferoberfläche mit einem Infrarotsensor; Vergleichen der Temperatur der mehreren Stellen mit einer vorbestimmten Temperatur; und Regeln des Systems als Reaktion auf den Vergleich.

Weitere Aufgaben, Merkmale und Vorteile der vorliegenden Erfindung werden aus der folgenden ausführlichen Beschreibung bevorzugter Ausführungsformen im Zusammenhang mit den beiliegenden Zeichnungsfiguren offenbar.

### KURZE BESCHREIBUNG DER ZEICHNUNGEN

Fig. 1 ist ein Diagramm eines Kältemittelkreises nach einer Ausführungsform der Erfindung.
Fig. 2 ist ein Diagramm eines Kältemittelkreises, der in seiner Konstruktion dem unter Bezugnahme auf Fig. 1 beschriebenen entspricht.
Fig. 3 ist eine Draufsicht eines Infrarotsensors 4, der auf einer Oberfläche in Sichtlinie der stromabwärtigen Seite des Verdampfers nach einer Ausführungsform der Erfindung positioniert ist.
Fig. 4A zeigt den Abtastweg eines abtastenden Infrarotsensors entlang der Oberfläche des Verdampfers nach einer Ausführungsform der Erfindung.
Fig. 4B zeigt einzelne Gebiete auf einer Verdampferoberfläche, deren Temperaturen jeweils durch einen oder mehrere Infrarotsensoren nach einer weiteren Ausführungsform der Erfindung bestimmt werden.
Fig. 5 ist ein Flußdiagramm, das die Funktionsweise der Erfindung allgemein darstellt.

### AUSFÜHRLICHE BESCHREIBUNG BEVORZUGTER AUSFÜHRUNGSFORMEN

Mit der vorliegenden Erfindung wird die Temperatur der Luftauslaßseite des Verdampfers unter Verwendung eines Infrarotsensors gemessen. Die Temperatur wird vorzugsweise über mehrere verschiedene Bereiche gemessen, in denen eine überkühlte Stelle vorkommen könnte. Es ist mehr zu bevorzugen, daß der Infrarotsensor die gesamte Oberfläche der Luftauslaßseite des Verdampfers fortlaufend abtastet. Die gemessene Temperatur wird zum Erfassen jeglicher überkühlter Stellen benutzt, die sich dynamisch auf der Verdampferoberfläche bilden könnten.

Nach einem Aspekt der Erfindung wird die gemessene Temperatur zum Regeln eines Heizungs-, Lüftungs- und Klimatisierungssystems in einem Fahrzeug benutzt. Insbesondere kann das System bei Erkennung einer oder mehrerer überkühlter Stellen, die einen Eisaufbau verursachen können, den Kompressor im Heizungs-, Lüftungs- und Klimatisierungssystem abschalten. Als Alternative kann das System bei Erkennung einer oder mehrerer überkühlter Stellen die Leistung eines verstellbaren Kompressors herabsetzen.

Die Erfindung bietet mehrere ausgeprägte Vorteile. Als erstes können durch Überfahren von unterschiedlichen Bereichen der Verdampferoberfläche anstelle einer einzigen festen Stelle dynamische überkühlte Stellen erkannt werden. So arbeitet das erfindungsgemäße System und Verfahren unabhängig vom Kältemittelfüllstand und den Betriebsbedingungen, die die Orte von überkühlten Stellen verändern können.

Zusätzlich ermöglicht die Erfindung eine verringerte Entwicklungs- und Abstimmzeit für den Abtauteil eines typischen Heizungs-, Lüftungs- und Klimatisierungsprüfprogramms. Weiterhin kann der Regelungsvorgang für die bei der Erfindung benutzte Infrarot-Temperaturmessung aus bewährten Algorithmen wie solchen, die CFD (computational fluid dynamics - Berechnung der Dynamik der flüssigen Körper) benutzen, abgeleitet werden.

Weiterhin sind IR-Sensoren sehr zuverlässig. Demnach kann die Erfindung in verschiedenen Anwendungen und Umgebungen wie beispielsweise Lastwagen verwendet werden, wo hohe Haltbarkeit erforderlich ist.

Weiterhin verbessert die Erfindung die Dienstverfügbarkeit. Insbesondere muß der IR-Sensor bei Wartung des Verdampferkerns nicht entfernt und wieder eingebaut werden.

Dem Fachmann werden diese Vorteile und andere aus der nachfolgenden Beschreibung bevorzugter Ausführungsformen der Erfindung offenbar werden. Die nachfolgende Beschreibung ist selbstverständlich nur beispielhaft und soll die Erfindung nicht begrenzen.

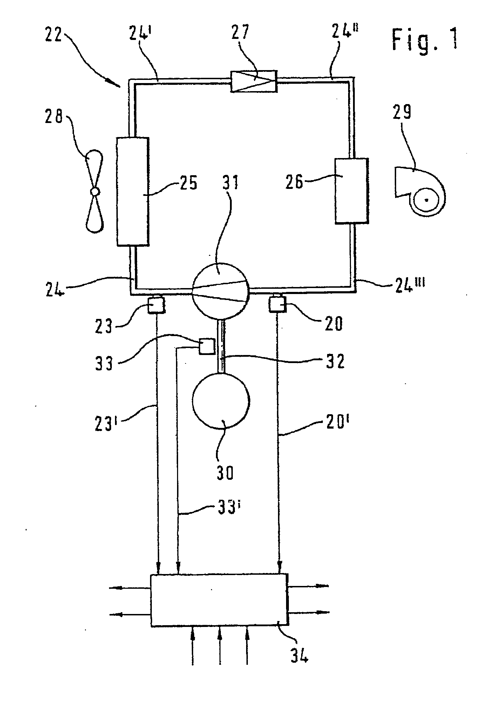

Fig. 1 zeigt einen Kältemittelkreis 22, bei dem die Erfindung beispielhafterweise benutzt werden kann. Ein derartiger Kreislauf wird ausführlich im US-Patent Nr. 6,073,457 im gemeinsamen Besitz beschrieben, dessen Offenbarung hiermit durch Bezugnahme in ihrer Gesamtheit aufgenommen wird. Der Kältemittelkreis umfaßt einen Kompressor 31, einen Kondensator 25, einen Verdampfer 26 und ein Expansionsventil 27. Die einzelnen Einheiten 25, 26, 27, 31 sind mittels Rohrleitungen 24, 24', 24'', 24''' miteinander verbunden. Der Kältemittelkreis 22 ist mit einem geeigneten Kältemittel einschließlich beispielsweise eines ölenthaltenden Kältemittels wie beispielsweise R134a und dergleichen angefüllt. Dem Kondensator 25 ist ein Kondensatorgebläse 28 zugeordnet und zum Erzeugen eines Luftstroms durch den Verdampfer 26 ist ein Verdampfergebläse 29 bereitgestellt. Der Kompressor 31 ist mittels einer Antriebswelle 32 an einen Motor 30 angekoppelt, der beispielsweise ein ein Kraftfahrzeug antreibender Verbrennungsmotor ist. Der Kompressor kann ein beliebiger Typ nach dem Stand der Technik einschließlich eines festen Kompressors, eines verstellbaren Kompressors oder eines extern geregelten verstellbaren Kompressors sein. Der Kompressor wird (z.B. im Fall eines festen Kompressors) zum Ein- oder Ausschalten angesteuert oder kann (beispielsweise im Fall eines verstellbaren Kompressors) zur Leistungsverringerung angesteuert werden.

Der Saugdrucksensor 20 ist an der Saugseite des Kompressors 31 auf der Rohrleitung 24''' angeordnet und auf der Hochdruckseite des Kompressors 31 ist auf der Rohrleitung 24 ein Hochdrucksensor 23 vorgesehen. In unmittelbarer Nähe der Antriebswelle 32 befindet sich ein Drehzahlmesser 33, um die jeweilige Geschwindigkeit zu erfassen, mit der der Kompressor 31 betrieben wird. Die Sensoren 20, 23, 33 sind mittels Verbindungsleitungen 20', 23', 33' mit einer elektronischen Steuervorrichtung 34 verbunden. Die von den Sensoren 20, 23, 33 erzeugten Signale werden in die elektronische Steuervorrichtung 34 eingespeist, so daß der Betrieb des Kompressors überwacht werden kann. Auch werden der elektronischen Steuervorrichtung 34 weitere Parameter einschließlich der unter Verwendung eines ausführlicher unten beschriebenen Infrarotsensors erhaltenen zugeführt. Diese Parameter können auch Zustandsvariablen umfassen, die für den Klimatisierungsbetrieb relevant sind.

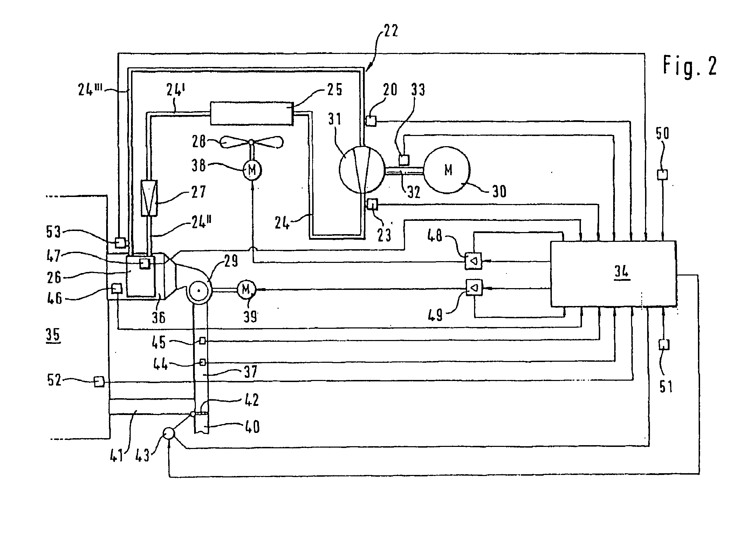

Fig. 2 zeigt einen beispielhaften Kältemittelkreislauf 22, der in seiner Auslegung dem unter Bezugnahme auf Fig. 1 beschriebenen entspricht. Nach der Darstellung ist der Verdampfer 26 in einem Zuluftkanal 36 für einen Fahrgastraum 35 eines Kraftfahrzeuges angeordnet. Stromaufwärts des Verdampfers 26 in der Luftstromrichtung ist das Verdampfergebläse 29 angeordnet, das auf der Ansaugseite mit einem Luftführungskanal 37 verbunden ist. In das Vorderende des Luftführungskanals 37 öffnet sich ein Frischluftkanal 40 und ein Umluftkanal 41, der wahlweise mittels einer Luftklappe 42 mit dem Luftführungskanal 37 verbunden sein kann. Die als Frischluft-/Umluft-Luftklappe aufgebaute Luftklappe 42 ist an einen Stellmotor 43 angekoppelt, der von der elektrischen Steuervorrichtung 34 angesteuert wird. Die jeweilige aktuelle Lage des Stellmotors 43 wird erfaßt und ein entsprechendes Signal an die Steuervorrichtung 34 gesendet.

Nach einem Merkmal der Erfindung ist im System der Fig. 2 ein IR-Temperatursensor 46 an der Ausflußseite des Verdampfers 26 vorgesehen, um die Temperatur einer Oberfläche des Verdampfers zu messen. Die Funktionsweise des Infrarotsensors 46 wird ausführlicher unten beschrieben.

Auch können in Abhängigkeit von der bestimmten Auslegung und Funktionsweise des Heizungs-, Lüftungsund Klimatisierungssystems andere Sensoren bereitgestellt werden. Beispielsweise befinden sich in der in Fig. 2 dargestellten Ausführungsform die Sensoren 44 und 45 im Luftführungskanal 37. Der Sensor 44 erfaßt die Luftfeuchtigkeit und der Sensor 45 erfaßt die Temperatur der dem Verdampfer 36 zugeführten Luft. Auch sind ein Außentemperatursensor 50 und ein Fahrgastraum-Temperatursensor 52 vorgesehen, wie bei Kraftfahrzeug-Klimatisierungsanlagen herkömmlich ist. Weiterhin wird für die elektronische Steuervorrichtung 34 ein Fahrzeuggeschwindigkeitssensor 51 bereitgestellt, um gegebenenfalls die Fahrzeuggeschwindigkeit zu berücksichtigen. Zusätzlich zu den bereits im Bezug auf Fig. 1 beschriebenen Sensoren 20 und 23 für den Saugdruck und den Hochdruck im Kältemittelkreislauf 22 in der Fig. 2 ist an der Ausgangsseite des Verdampfers 26 im Kältemittelkreislauf 22 ein Kältemittel-Temperatursensor 53 angeordnet, dessen Signal zur Bestimmung von Überheizung benutzt werden kann. Weiterhin befindet sich in diesem bestimmten Beispiel wahlweise ein weiterer Temperatursensor 47 innerhalb des Verdampferblocks.

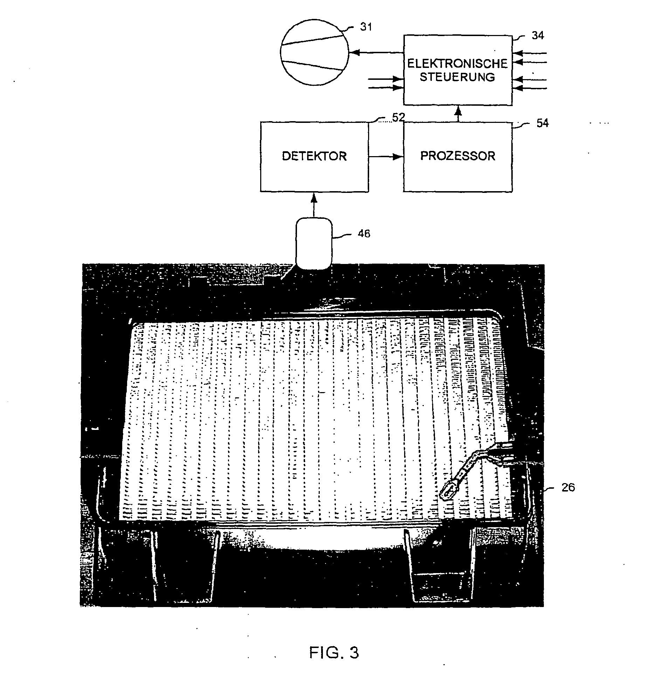

Der IR-Sensor 46 ist zum Erfassen der Temperatur über mehrere unterschiedliche Bereiche auf der Auslaßseite des Verdampfers 26 positioniert. Vorzugsweise ist der Infrarotsensor 46 zum Erfassen der Temperatur über die gesamte Oberfläche der Auslaßseite positioniert. Ein Beispiel einer derartigen Lage ist in Fig. 3 dargestellt, in der der IR-Sensor 46 auf einer Oberfläche in Sichtlinie der stromabwärtigen Seite des Verdampfers 26 positioniert ist. Man wird erkennen, daß andere Lagen möglich sind, vorausgesetzt, daß die Sicherstellung einer klaren Sichtlinie und das Vermeiden einer Blockierung des Sensors oder der zu erfassenden Oberfläche durch Teilchen, Flüssigkeit oder Verunreinigungen berücksichtigt wird.

Die Erfindung ist nicht unbedingt auf einen bestimmten Typ von IR-Sensor begrenzt. Vorzugsweise ist der IR-Sensor zum Abtasten der gesamten Oberfläche des Verdampfers 26 aufgebaut. Abtastende IR-Sensoren sind in der Technik wohlbekannt. Der Aufbau und die Funktionsweise eines derartigen IR-Sensors ist im US-Patent Nr. 5,094,544 beschrieben, das hierin in seiner Gesamtheit durch Bezugnahme aufgenommen wird.

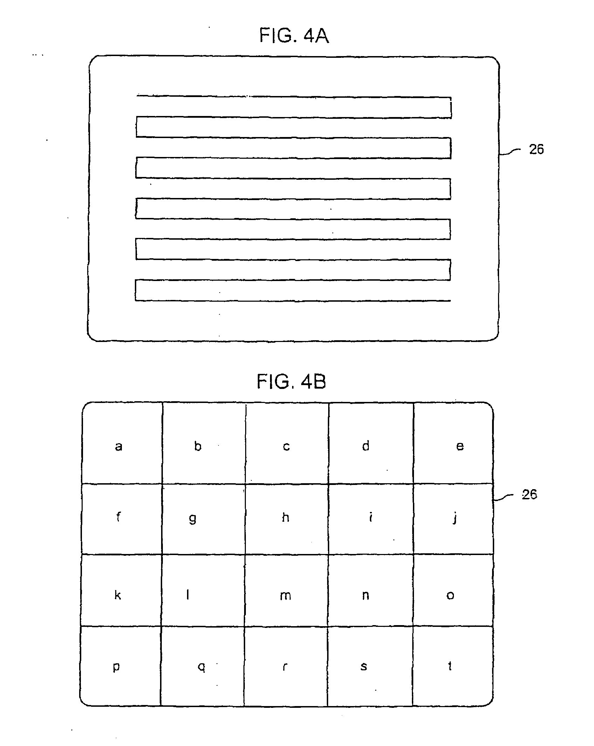

Nach der Darstellung in Fig. 4A wird die Oberfläche des Verdampfers 26 auf ähnliche Weise wie die Rasterabtastung eines Elektronenstrahls in einer Kathodenstrahlröhre durch einen abtastenden IR-Sensor 46 abgetastet. So läuft der IR-Sensor 46 im vorliegenden Beispiel in der x-Richtung hin und zurück und in der y-Richtung auf und ab. Wenn der IR-Sensor 46 die Oberfläche des Verdampfers 26 abtastet, gibt er fortlaufend ein Signal, z.B. eine Spannung, aus, die sich als Funktion der Temperatur der Oberfläche verändert. Als Alternative können wie in Fig. 4B gezeigt einzelne IR-Sensoren vorgesehen sein, um die Temperatur in einem oder mehreren Gebieten a - o auf der Oberfläche des Verdampfers 26 zu erfassen.

Die Signale vom Infrarotsensor 46 müssen verarbeitet werden, um zu bestimmen, ob sich auf dem Verdampfer 26 eine überkühlte Stelle gebildet hat. Man wird erkennen, daß diese Verarbeitung entsprechend unterschiedlichen, in der Technik bekannten Verfahren erreicht werden kann. Im allgemeinen gehört zu der Verarbeitung die richtige Erkennung des rohen Ausgangssignals und Bestimmung von Temperatur auf Grundlage des erkannten Signals. In dem Beispiel der Fig. 3 wird dies durch einen Detektor 52 durchgeführt, der das rohe Signal vom IR-Sensor verstärkt. Die Signale vom Detektor werden dann einem Prozessor 54 zugeführt, der aus dem erkannten Signal entsprechend in der Technik wohlbekannten Verfahren eine Temperatur erhält.

Sobald die Temperaturen der Gebiete in der Sichtlinie des Detektors erhalten worden sind, können sie von einem Regler wie beispielsweise der elektronischen Steuervorrichtung 34 zum Regeln des Systems wie gewünscht benutzt werden. Beispielsweise werden die erkannten Temperaturen T_{D} mit einer vorbestimmten Schwellentemperatur T_{TH} verglichen. Die vorbestimmte Schwellentemperatur kann beispielsweise eine Temperatur sein, bei der man erwartet, daß sich Eis bildet, typischerweise um 0°C. Es kann ein Wert sein, der auf Grundlage anderer Umgebungsbedingungen wie beispielsweise Luftfeuchtigkeit eingestellt wird.

Wenn festgestellt wird, daß die erkannte Temperatur unter dem vorbestimmten Schwellwert T_{TH} liegt, schaltet die elektronische Steuervorrichtung 34 dann den Kompressor 31 aus, wodurch die Verdampferoberfläche wärmer werden kann. Als Alternative kann die Leistung eines verstellbaren Kompressors als Reaktion auf die erkannte Temperatur durch eine Steuervorrichtung verringert werden. Zur Verbesserung der Genauigkeit können mehrere Vergleiche angestellt werden und der Kompressor 31 wird nur dann abgeschaltet (bzw. seine Leistung nur dann reduziert), wenn festgestellt wird, daß die erkannte Temperatur T_{D} über irgendeine vorbestimmte Zeitdauer hinweg, die mehrere Messungen umfassen kann, unter der Schwellentemperatur T_{H} liegt.

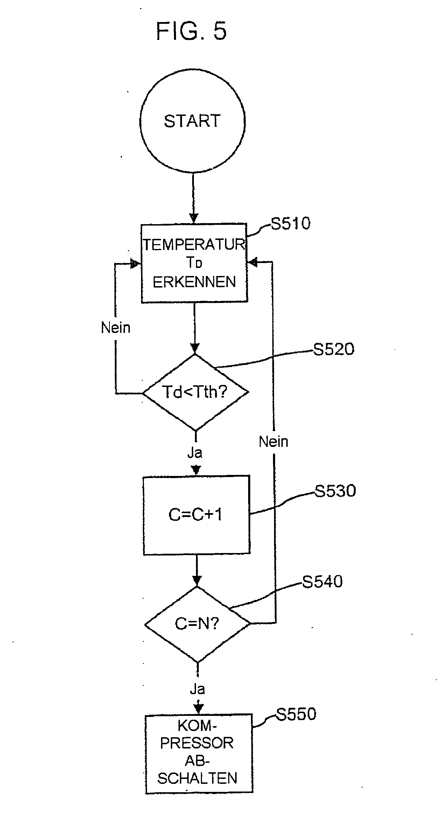

Diese allgemeine Funktionsweise ist in Fig. 5 dargestellt. Im Schritt S510 wird ein Temperatursignal entsprechend der Temperatur bei T_{D} in einem auf dem Abtastweg des Sensors befindlichen Bereich des Verdampfers erkannt. Im Schritt 520 wird die erkannte Temperatur T_{D} mit einer vorbestimmten Schwellentemperatur T_{TH} verglichen. Wenn die erkannte Temperatur T_{D} höher als die Schwellentemperatur T_{TH} ist, dann wiederholt sich das Verfahren. Wenn die erkannte Temperatur unter der Schwellentemperatur T_{TH} liegt, dann wird ein Zähler erhöht. Wenn die Temperatur T_{D} den Schwellwert für irgendeine vorbestimmte vom Zähler gemessene Zeitdauer überschreitet (S540), dann schaltet die elektronische Steuervorrichtung 34 den Kompressor 31 aus (S550). Das System kann dann weiterhin die Temperatur überwachen, um zu bestimmen, ob alle überkühlten Stellen nicht länger erkennbar sind, und dann den Kompressor einschalten. Als Alternative könnte auf Grundlage der erkannten Temperatur die Leistung eines verstellbaren Kompressors eingestellt werden, anstatt ihn vollständig ein- und auszuschalten.

Man wird erkennen, daß der Detektor 52, der Prozessor 54 und der Regler bzw. die elektronische Steuervorrichtung 34 als Hardware oder Software oder irgendeine Kombination der beiden implementiert werden können. Weiterhin können sie durch dieselbe Vorrichtung oder durch getrennte fest zugeordnete Vorrichtungen implementiert werden. Beispielsweise kann der Prozessor 54 einen Analog-Digitalwandler (A/D) und einen fest zugeordneten Mikroprozessor enthalten, der zum Berechnen erkannter Temperaturen T_{D} und Vergleichen dieser Temperaturen mit einer vorbestimmten Temperatur T_{TH} programmiert ist. Vorzugsweise kann der Mikroprozessor einen kostengünstigen schnellen 16-Bit/24-Bit-Prozessor mit eingebauten Digitalsignalverarbeitungsanweisungen für Gleitkomma-Berechnungen umfassen. Ein solcher Prozessor 54 kann einen zugehörigen Speicher zum Speichern von Software zur Steuerung der Funktionsweise der ZE, zum Speichern von Daten zum Vergleichen mit gemessenen Daten oder zum Unterstützen der Berechnung durch die ZE enthalten. Ein derartiger "fest zugeordneter" Prozessor liefert Signale an die elektronische Steuervorrichtung 34, die anzeigen, daß festgestellt wurde, daß der Verdampfer eine überkühlte Stelle aufweist oder keine überkühlte Stelle aufweist, und von der elektronischen Steuervorrichtung 34 wird der Kompressor oder sonstige Elemente des Heizungs-, Lüftungs- und Klimatisierungssystems dementsprechend gesteuert.

Als Alternative können Signale vom Detektor 52 in eine digitale Form umgewandelt und direkt einem Fahrzeugrechner zugeführt werden, der der elektronischen Steuervorrichtung 34 entsprechen kann. In einem solchen Fall werden alle notwendigen Berechnungen zum Erfassen einer überkühlten Stelle und Steuerung des Heizungs-, Lüftungs- und Klimatisierungssystems vom Fahrzeugrechner gehandhabt.

Aus der obigen Beschreibung wird man verstehen, daß das Grundprinzip der vorliegenden Erfindung auch in anderen Anwendungen, beispielsweise zum Steuern der Ausschubtemperatur einer Wasserventilanlage und der Mischkammer einer Luftmischeinheit benutzt werden kann. Auch könnte sie in externe Systeme übernommen werden, um die Geschwindigkeit und/oder das Volumen eines verstellbaren Kompressors zu ändern.

Weiterhin wird auch offensichtlich sein, daß verschiedene alternative Konstruktionen und Verbesserungen möglich sind. Beispielsweise kann mehr als ein IR-Sensor in Verbindung mit der Erfindung benutzt werden, um Genauigkeit zu verbessern und umgebungsspezifische Variationen zu kompensieren. Obwohl daher bestimmte Ausführungsformen gemäß der Erfindung dargestellt und oben beschrieben worden sind, wird klar sein, daß die Erfindung im Rahmen der beiliegenden Ansprüche verschiedene Formen und Ausführungsformen annehmen kann.

## Patentansprüche

1. System zum Messen der Temperatur zum Regeln eines Heizungs-, Lüftungs- und Klimatisierungssystems mit folgendem:
einem Verdampfer mit einer Oberfläche;
mindestens einem Infrarotsensor zum Erkennen der Temperatur von mehreren Bereichen der Verdampferoberfläche;
einem Prozessor zum Bestimmen, ob die erkannte Temperatur an mindestens einem der mehreren Bereiche der Verdampferoberfläche unter einer Schwellentemperatur liegt; und
einem Regler zum Regeln der Funktionsweise des Heizungs-, Lüftungs- und Klimatisierungssystems als Reaktion auf eine Bestimmung, ob die erkannte Temperatur in mindestens einem der mehreren Bereiche der Verdampferoberfläche unter der Schwellentemperatur liegt.

2. System nach Anspruch 1, wobei die mehreren Bereiche im wesentlichen die Gesamtheit der Luftauslaßseite des Verdampfers umfassen.

3. System nach Anspruch 1, wobei die Verdampferoberfläche zeilenweise in einem Rastermuster abgetastet wird.

4. System nach Anspruch 1, wobei die Verdampferoberfläche mit einem oder mehreren Sensoren abgetastet wird, die jeweils die Temperatur in einem oder mehreren der mehreren Bereiche erkennen.

5. System nach Anspruch 1, wobei der Regler die Leistung eines Heizungs-, Lüftungs- und Klimatisierungskompressors begrenzt, wenn bestimmt wird, daß die erkannte Temperatur von mindestens einem der mehreren Bereiche der Verdampferoberfläche unter der Schwellentemperatur liegt.

6. System nach Anspruch 1, wobei die vorbestimmte Temperatur 0°C ist.

7. In einem Klimatisierungssystem mit einem Verdampfer, einem Kondensator und einem Regler, ein Verfahren mit folgendem:
Erkennen der Temperatur von mehreren Stellen einer Verdampferoberfläche mit einem Infrarotsensor;
Vergleichen der Temperatur der mehreren Stellen mit einer vorbestimmten Temperatur; und
Regeln des Systems als Reaktion auf den Vergleich.

8. Verfahren nach Anspruch 7, wobei das Erkennen das Abtasten von im wesentlichen der Gesamtheit der Luftauslaßseite des Verdampfers umfaßt.

9. Verfahren nach Anspruch 7, wobei das Regeln des Systems das Abschalten des Kompressors umfaßt, wenn mindestens eine der Stellen auf oder unterhalb der vorbestimmten Temperatur liegt.

10. Verfahren nach Anspruch 7, wobei die vorbestimmte Temperatur 0°C ist.

11. Verfahren nach Anspruch 7, wobei das Klimatisierungssystem die Lufttemperatur in einem Fahrzeug regelt.

12. Vorrichtung zum Regeln eines Klimatisierungssystems mit folgendem:
einem Infrarotsensor zum Erkennen der Temperatur von mehreren Stellen einer Verdampferoberfläche;
Mitteln zum Vergleichen der Temperatur der mehreren Stellen mit einer vorbestimmten Temperatur; und
Mitteln zum Regeln des Systems als Reaktion auf den Vergleich.

13. Vorrichtung nach Anspruch 12, wobei der Infrarotsensor zum Abtasten von im wesentlichen der Gesamtheit der Luftauslaßseite des Verdampfers aufgebaut ist.

14. Vorrichtung nach Anspruch 12, wobei die Mittel zum Regeln Mittel zum Abschalten des Kompressors umfassen, wenn mindestens eine der Stellen auf oder unterhalb der vorbestimmten Temperatur liegt.

15. Vorrichtung nach Anspruch 12, wobei die vorbestimmte Temperatur 0°C ist.

16. Vorrichtung nach Anspruch 12, wobei das Klimatisierungssystem die Lufttemperatur in einem Fahrzeug regelt.
